# FASCICULE DE BREVET EUROPEEN

(11) **EP 0 796 189 B1**
(45) Date de publication et mention de la délivrance du brevet: **12.01.2000**
(21) Numéro de dépôt: 95934203.1
(22) Date de dépôt: 12.10.1995
(51) Int. Cl.: B60T 13/52

(54) **SERVOMOTEUR PNEUMATIQUE D'ASSISTANCE AU FREINAGE, A FONCTIONNEMENT SILENCIEUX**
GERÄUSCHARMER PNEUMATISCHER BREMSKRAFTVERSTÄRKER
SILENT PNEUMATIC BRAKE SERVO

(30) Priorité: 09.12.1994 FR 9414809
(43) Date de publication de la demande: 24.09.1997
(73) Titulaire: Bosch Systemes de Freinage, 93700 Drancy (FR)
(72) Inventeur: SCHEWE, Jörg, F-75019 Paris (FR)
(74) Mandataire: Bentz, Jean-Paul
(86) Numéro de dépôt international: FR9501329
(87) Numéro de publication internationale: WO9617758

(56) Documents cités:
- DE-A- 3 900 416
- DE-A- 3 923 843
- DE-A- 4 014 560
- DE-U- 8 704 366

## Description

La présente invention concerne les servomoteurs pneumatiques, du type de ceux qui sont utilisés pour fournir une assistance au freinage des véhicules automobiles.

De tels servomoteurs comportent de façon classique une enveloppe possédant un axe de symétrie, séparée de façon étanche par une structure de paroi mobile en une chambre avant reliée en permanence à une source de dépression, et une chambre arrière reliée sélectivement à la chambre avant ou à l'atmosphère extérieure par une valve à trois voies actionnée par un plongeur coulissant dans un alésage de la paroi mobile et solidaire d'une tige de commande axiale, la valve à trois voies étant disposée dans une partie tubulaire arrière de la structure de paroi mobile faisant saillie à l'extérieur de l'enveloppe et comportant un élément de clapet coopérant par une première surface annulaire avec un premier siège de clapet formé sur le plongeur et par une seconde surface annulaire avec un second siège de clapet formé sur la paroi mobile.

Ces servomoteurs sont habituellement disposés dans le compartiment moteur du véhicule, sur le tablier de celui-ci, de sorte que la tige de commande du servomoteur fasse saillie dans l'habitacle pour pouvoir être actionnée par le conducteur. Il s'ensuit que la partie centrale arrière de la paroi mobile, comportant la valve à trois voies, fait également saillie à l'intérieur de l'habitacle.

Il en résulte que, lorsque le conducteur actionne la pédale de frein reliée à la tige de commande du servomoteur, ce dernier aspire de l'air à la pression atmosphérique dans l'habitacle du véhicule. L'air mis en mouvement par le fonctionnement du servomoteur génère alors des bruits qui sont intégralement transmis dans l'habitacle du véhicule.

On a tenté d'apporter diverses solutions à ce problème. Par exemple, le document FR-A-2 551 009 prévoit des moyens de guidage de l'air aux alentours immédiats de la valve à trois voies, en amont et en aval de celle-ci.

Le document FR-A-2 516 880 prévoit un dispositif de silencieux en mousse réticulée, disposé à l'intérieur de la partie centrale arrière de la structure de paroi mobile, ce dispositif comportant une surface externe s'appliquant contre la surface interne de cette partie centrale arrière, et dont l'intérieur est formé avec des ouvertures de passage ininterrompu, orientées suivant la direction de la tige de commande, pour procurer un passage d'écoulement de l'air au travers du dispositif.

Le document DE-A-3 924 672 prévoit quant à lui un servomoteur dont la prise d'air à la pression atmosphérique est située dans le compartiment moteur du véhicule.

Toutefois, ces solutions antérieures présentent encore des dispositifs imparfaits, ou économiquement inapplicables car trop complexes. De plus, dans le but de réduire le bruit de fonctionnement, ces systèmes introduisent sur le parcours de l'air des obstacles à son mouvement qui augmentent le temps de réponse du servomoteur au début de sa phase d'actionnement.

La présente invention a donc pour objet de proposer un servomoteur dont le fonctionnement soit silencieux, en mettant en oeuvre des moyens simples, fiables et peu onéreux, et sans dégrader le temps de réponse du servomoteur.

Dans ce but, l'invention propose un servomoteur du type rappelé plus haut, dans lequel la seconde surface annulaire est située dans un plan transversal en avant du plan transversal dans lequel est située la première surface annulaire, les première et seconde surfaces annulaires étant raccordées par une surface de l'élément de clapet située en regard d'une surface du plongeur, la première surface annulaire et la surface de l'élément de clapet définissant avec le siège de clapet formé sur le plongeur un passage de valve dont la section est une fonction non linéaire de la distance entre le premier siège de clapet et la première surface annulaire inférieure ou égale à la fonction linéaire de cette distance.

Selon des modes de réalisation préférentiels, la surface de l'élément de clapet est cylindrique ou tronconique et définit avec le siège de clapet formé sur le plongeur un passage de valve dont la section est constante ou sensiblement constante pour toute valeur de la distance entre le premier siège de clapet et la première surface annulaire.

Ainsi, la section de passage offerte à l'air vers la chambre arrière du servomoteur étant au moins sensiblement constante, le débit d'air traversant le passage de valve est lui aussi au moins sensiblement constant, de sorte que le bruit généré par l'air en mouvement peut être maintenu à un niveau sensiblement constant, que l'on pourra choisir assez bas.

D'autres buts, caractéristiques et avantages de la présente invention ressortiront plus clairement de la description qui suit d'un exemple de réalisation donné à titre illustratif, en référence aux dessins annexés sur lesquels:
- La Figure 1 est une vue de côté, en coupe longitudinale, représentant la partie centrale arrière d'un servomoteur pneumatique d'assistance au freinage réalisé conformément à la présente invention,
- la Figure 2 est une vue semblable à celle de la Figure 1, d'une variante de réalisation,
- la Figure 3 est une courbe donnant la section de passage de la valve du servomoteur représenté sur les Figures 1 et 2, en fonction de la position axiale relative du plongeur et du clapet, et
- la Figure 4 est une courbe donnant le niveau sonore, exprimé en décibels, d'un servomoteur réalisé conformément à l'invention et d'un servomoteur conventionnel.

Les Figures représentent la partie centrale arrière d'un servomoteur pneumatique d'assistance au freinage prévu pour être placé de façon habituelle entre la pédale de frein d'un véhicule et le maître-cylindre commandant le circuit de freinage hydraulique de ce véhicule. Par convention, on appelle "avant" du servomoteur la partie de ce dernier tournée vers le maître-cylindre et "arrière" du servomoteur la partie tournée vers la pédale de frein. Sur les Figures, l'avant est ainsi à gauche et l'arrière à droite.

Le servomoteur représenté comprend une enveloppe extérieure 10 en forme de coquille, présentant une symétrie de révolution autour d'un axe X-X'. Seule la partie centrale arrière de cette enveloppe 10 est représentée sur les Figures.

Une structure de paroi mobile 12 délimite à l'intérieur de l'enveloppe 10 une chambre avant 14 et une chambre arrière 16. La paroi mobile 12 est associée à une membrane déroulante souple en élastomère dont le bord périphérique intérieur est reçu de façon étanche grâce à un bourrelet 18 dans un piston creux d'assistance 20 disposé selon l'axe X-X' du servomoteur, et dont le bord périphérique extérieur (non représenté) est fixé de façon étanche sur l'enveloppe extérieure 10.

Le piston creux 20 se prolonge vers l'arrière sous la forme d'une partie tubulaire 22 qui traverse de façon étanche la paroi arrière de l'enveloppe 10. Un ressort de compression 24 interposé entre le piston 20 et la paroi avant (non représentée) de l'enveloppe 10 maintient normalement le piston 20 dans la position arrière de repos illustrée sur les Figures, dans laquelle la chambre arrière 16 présente son volume minimal et la chambre avant 14 son volume maximal.

Dans la partie centrale de la paroi mobile située en avant de la partie tubulaire arrière 22, le piston 20 présente un alésage 26 dans lequel est reçu en coulissement un plongeur 28 présentant également une symétrie de révolution autour de l'axe X-X'. L'extrémité avant d'une tige de commande 30 du servomoteur, disposée également selon l'axe X-X', est montée rotulante dans un alésage borgne du plongeur 28.

L'extrémité arrière (non représentée) de la tige de commande 30, qui fait saillie à l'extérieur de la partie tubulaire 22, est commandée directement par la pédale de frein du véhicule (non représentée).

L'espace annulaire 32 entre la partie tubulaire arrière 22 et la tige de commande 30 peut communiquer avec la chambre arrière 16 au travers d'un passage radial 34 formé dans la partie centrale du piston 20, lorsque des moyens d'assistance commandés par le plongeur 28 sont actionnés.

De façon classique, ces moyens d'assistance comprennent une valve à trois voies comportant un clapet annulaire 36 et deux sièges de clapet annulaires 20a et 28a formés respectivement à l'arrière de la partie centrale du piston 20 et à l'arrière du plongeur 28, un ressort de clapet 37 sollicitant le clapet 36 en direction des sièges 20a et 28a.

Lorsque la tige de commande 30 est en position arrière de repos, la valve à trois voies établit normalement une communication entre les deux chambres 14 et 16 du servomoteur par l'intermédiaire du passage radial 34 et d'un passage sensiblement axial 38 formé dans la partie centrale du piston 20, le siège de clapet 20a étant légèrement écarté du clapet annulaire 36.

Dans une conception classique de valve à trois voies, telle qu'illustrée par exemple par l'un des documents précités, lorsque le conducteur appuie sur la pédale de frein, l'air dans l'espace annulaire 32 est aspiré dans la chambre arrière 16 par le passage de valve 28a-36 entre le clapet 36 et le siège de clapet 28a formé sur le plongeur 28.

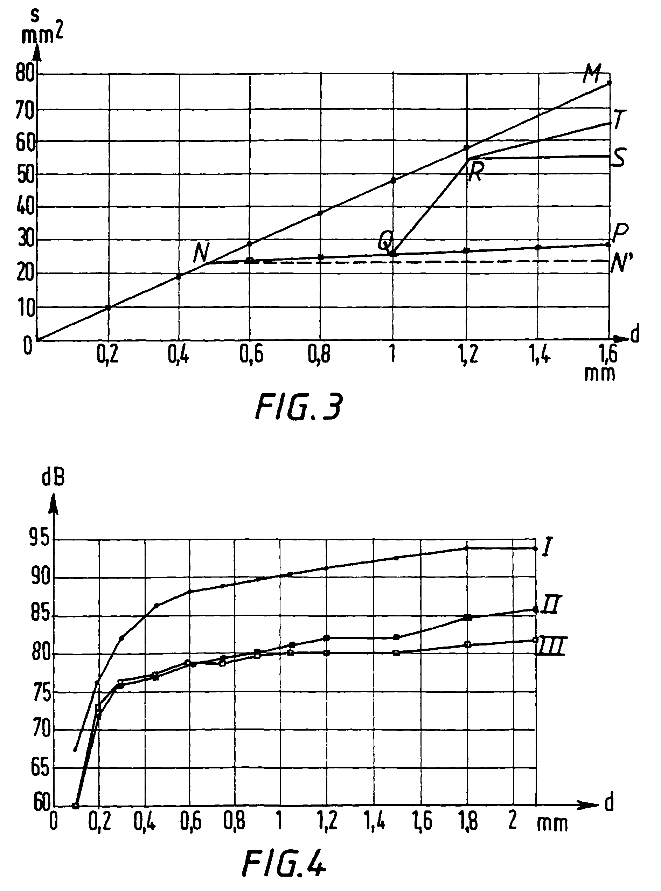

Dans cette conception connue, la section s de passage de l'air est directement proportionnelle à la distance axiale d entre le siège de clapet 28a et la surface annulaire frontale du clapet 36. Cette section de passage est représentée par exemple par la droite OM de la Figure 3, en fonction de la distance d. Il s'ensuit que le débit d'air, lui-même fonction linéaire de la section, est directement proportionnel à cette distance d, et que le bruit dû à cet air en mouvement est lui aussi croissant avec la distance d.

La présente invention a précisément pour objet de réduire le bruit engendré par la valve à trois voies, en prévoyant de maîtriser le débit d'air pour limiter le bruit qui en résulte.

Conformément à la présente invention, la partie du clapet tournée vers l'avant comporte une première surface annulaire plane A coopérant avec le siège de clapet 28a formé sur le plongeur 28, et une seconde surface annulaire plane B coopérant avec le siège de clapet 20a formé sur le piston 20, la surface annulaire B étant formée dans un plan transversal situé en avant du plan transversal contenant la surface annulaire A et ayant un diamètre intérieur supérieur au diamètre extérieur de la surface A. Ces deux surfaces A et B sont raccordées par un troisième surface C, de forme générale tronconique, et sont espacées de la distance axiale L.

Dans l'exemple représenté, le clapet 36 est formé à l'aide d'un insert 40 comportant une partie arrière annulaire 42 et une partie avant cylindrique 44, le matériau élastomère constituant le clapet 36 étant surmoulé sur cet insert de façon à ce que les deux surfaces A et B présentent la même élasticité dans leur coopération avec les sièges de clapet 20a et 28a, et à ce que la surface C soit raccordée à la surface A par une surface intermédiaire arrondie, ainsi qu'on l'a représenté.

Parallèlement, le siège de clapet 28a est formé à l'extrémité arrière du plongeur 28, et plus précisément à l'extrémité d'une partie tubulaire arrière 46 du plongeur, entourant la tige de commande 30, et dont la surface périphérique extérieure D est, au repos, en regard de la surface C du clapet 36 sur la longueur L. La surface D de la partie 46 pourra être cylindrique, ou, comme on l'a représenté, tronconique, avec un demi-angle au sommet petit, par exemple compris entre 0 et 20 degrés.

D'après les explications qui précèdent, on aura compris le fonctionnement de la valve à trois voies de l'invention.

Lorsque le conducteur du véhicule actionne la pédale de frein, il en résulte un mouvement vers l'avant de la tige de commande 30, du plongeur 28 et du clapet 36, dont la surface annulaire B vient d'abord au contact du siège de clapet 20a pour isoler l'une de l'autre les chambres 14 et 16. Ensuite, le siège de clapet 28a commence à s'éloigner de la surface annulaire A pour permettre à l'air à la pression atmosphérique dans l'espace annulaire 32 de pénétrer dans la chambre arrière 16, via le passage radial 34.

Dans une première phase du mouvement du plongeur 28 relativement au clapet 36, seule la distance axiale entre le siège de clapet 28a et la surface A détermine la valeur de la section de passage offerte à l'air en mouvement. Cette première phase est représentée par le segment ON sur la courbe de la Figure 3, qui est bien sûr sur la droite OM.

Lorsque la distance axiale entre le siège 28a et la surface A a atteint une certaine valeur, déterminée en particulier par le rayon de couture du siège 28a et celui de la surface arrondie du clapet 36 raccordant les surfaces A et C, la valeur de la section de passage de l'air est alors déterminée par la distance radiale entre le siège 28a et la surface C du clapet.

Si la surface C est cylindrique, la section de passage sera alors constante, et conservera la valeur N atteinte à la fin de la phase de fonctionnement précédente, pour toute valeur de la distance d entre le siège 28a et la surface A, inférieure à la longueur L. L'évolution de la section de passage dans cette deuxième phase de fonctionnement du servomoteur par un segment NN' (Figure 3) parallèle à l'axe des abscisses. Le débit d'air vers la chambre arrière 16 du servomoteur sera alors constant, de même que le bruit engendré par l'air en mouvement.

Si, comme on l'a représenté, la surface C est tronconique, alors la section de passage de l'air évoluera en fonction de la valeur du demi-angle au sommet de la surface C. Pour des valeurs petites de ce demi-angle, par exemple comprises entre 0 et 20 degrés, l'évolution de la section de passage dans cette deuxième phase de fonctionnement du servomoteur est relativement lente, et peut être représentée par le segment NP sur la courbe de la Figure 3, la pente de ce segment NP étant faible, et directement fonction de l'angle de la surface C.

Il en résulte que le débit d'air vers la chambre arrière 16 du servomoteur reste sensiblement constant lors du mouvement du plongeur 28 dans l'alésage 26, de même que le bruit engendré par l'air ainsi mis en mouvement.

C'est bien ce que l'on constate expérimentalement, comme on le voit sur les courbes de la Figure 4, qui donnent le résultat de la mesure du niveau sonore d'un servomoteur en fonction de la distance axiale d entre le siège de clapet 28a et la surface A. La courbe I correspond à un servomoteur conventionnel, dont le fonctionnement est illustré par la droite OM sur la Figure 3. Les courbes II et III correspondent à deux servomoteurs équipés d'un clapet 36 et d'un plongeur 28 conformes à la présente invention, chacun ayant une valeur particulière du demi-angle au sommet de la surface tronconique C, tous les autres paramètres et les conditions de mesure étant évidemment identiques pour les trois courbes.

On voit en particulier sur la Figure 4 que, pour la seconde phase de fonctionnement du servomoteur correspondant au segment NP de la Figure 3, c'est à dire pour une distance d supérieure à environ 0,3 millimètres, le niveau sonore des servomoteurs réalisés conformément à la présente invention est inférieur de 10 à 15 décibels à celui d'un servomoteur conventionnel, et pendant toute la seconde phase de fonctionnement, ce qui correspond à une diminution très sensible du niveau sonore.

On voit également sur la Figure 4 que le niveau sonore des servomoteurs II et III est inférieur à celui du servomoteur conventionnel I même pendant la première phase de fonctionnement, correspondant au segment ON de la Figure 3. Ce phénomène s'explique par le fait que l'air en mouvement est guidé dès sa sortie du passage de valve 28a-A par la surface arrondie raccordant les surfaces A et C, et ainsi ne rencontre pas brutalement la paroi de l'alésage 26 comme il le fait dans un servomoteur conventionnel, ce qui crée des turbulences générant, en combinaison avec l'interstice du passage de valve, des bruits de sifflement, qui sont ainsi évités par la présente invention, procurant en quelque sorte un laminage de l'air en mouvement.

Une telle amélioration du bruit de fonctionnement est de plus obtenue sans aucun allongement du temps de réponse du servomoteur, et on constate même une amélioration de ce temps de réponse. En effet, selon l'invention, l'écoulement de l'air pénétrant dans la chambre arrière est amélioré par la forme particulière du clapet 36 et du plongeur 28. Comme d'autre part la section d'écoulement en aval de la valve à trois voies, dans un plan transversal entre le plongeur 28 et l'alésage 26, est constante si la surface D est cylindrique, ou légèrement divergente si la surface D est tronconique de demi-angle au sommet petit, le débit d'air se trouve également amélioré, et le temps de réponse diminué. Le demi-angle au sommet de la surface D pourra par exemple être choisi entre 0 et 20 degrés.

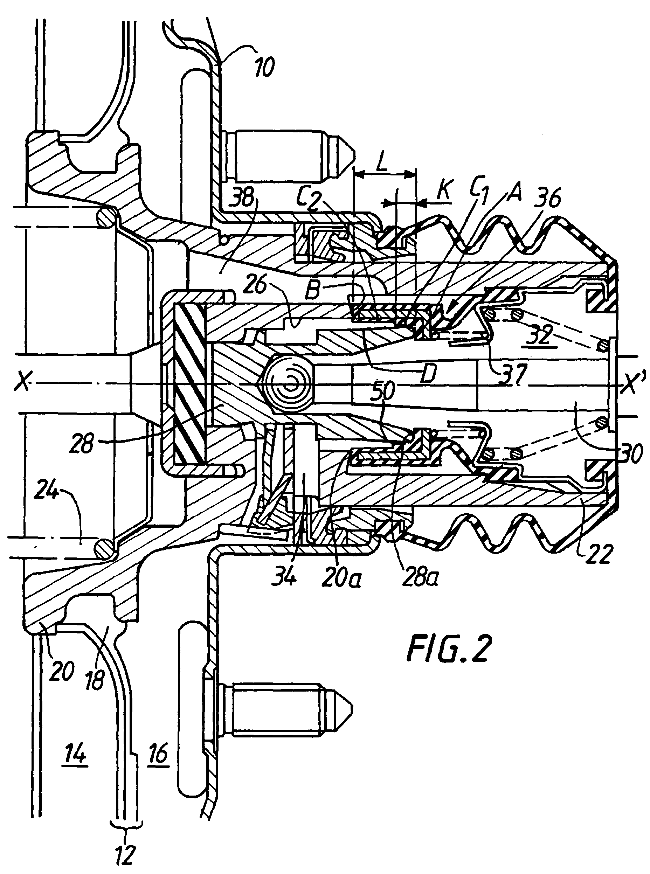

On a représenté sur la Figure 2 une variante du mode de réalisation qui vient d'être décrit où les mêmes éléments sont affectés des mêmes signes de référence. Selon cette variante de réalisation, seul le clapet 36 a été modifié par rapport au mode de réalisation précédent.

De façon plus précise, la surface intérieure de la partie cylindrique avant du clapet 36 est formée avec un épaulement radial 50, délimitant ainsi deux surfaces C₁ et C₂. La surface C₁, s'étendant entre la surface annulaire A et l'épaulement 50, a les mêmes caractéristiques que la surface C de l'exemple précédent, mais elle a une longueur axiale K inférieure à la longueur L de la surface C. La surface C₂, s'étendant entre l'épaulement 50 et la surface annulaire B, est cylindrique dans l'exemple représenté, et elle a un diamètre nettement supérieur au diamètre de l'extrémité avant de la surface C₁. La surface C₂ pourrait également être tronconique, de façon à former avec la surface D un volume divergent vers l'avant.

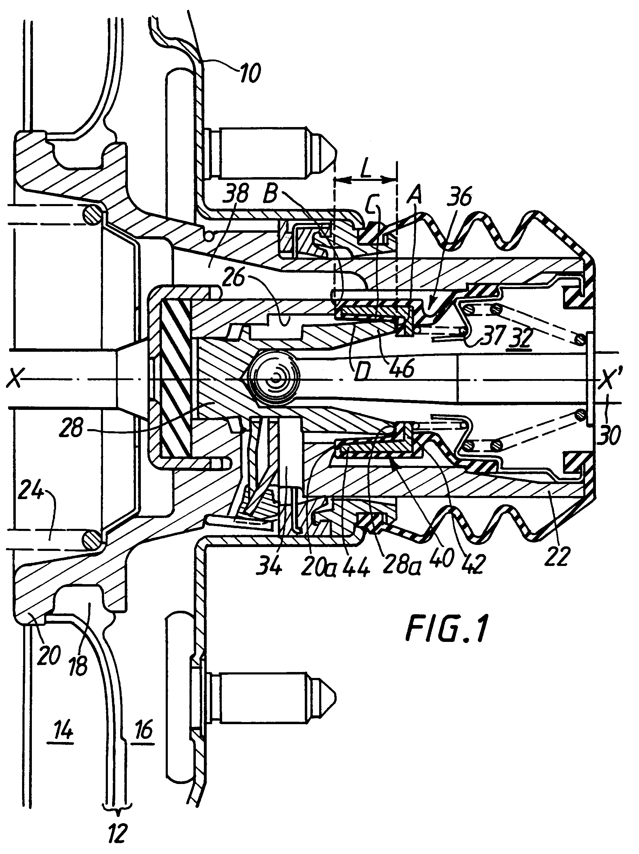

Le fonctionnement du servomoteur de la Figure 2 se déduit des explications qui précèdent. La première phase du mouvement du plongeur 28 relativement au clapet 36 est représentée par le segment ON de la Figure 3, la distance entre le siège 28a et la surface A jouant comme dans le mode de réalisation de la Figure 1 un rôle prépondérant dans cette phase de fonctionnement.

La surface C₁ étant identique à la partie arrière de la surface C, la seconde phase de fonctionnement du servomoteur de la Figure 2 est identique à celle du servomoteur de la Figure 1, à ceci près que, lorsque le siège de clapet 28a arrive au voisinage de l'épaulement 50, c'est à dire après avoir parcouru la distance K, il se produit une brusque augmentation de la section de passage, correspondant à l'augmentation de la distance entre le siège 28a et les surfaces C₁ et C₂.

Cette augmentation brusque de la section correspond à une troisième phase de fonctionnement du servomoteur, qui est représentée sur la Figure 3 par le segment QR. Puis, dans une quatrième phase de fonctionnement, le siège 28a se trouve en face de la surface cylindrique C₂, la section de passage reste ainsi constante, et représentée par le segment RS sur la Figure 3. Si la surface C₂ a été réalisée de forme tronconique, alors la section de passage dans cette quatrième phase sera elle aussi croissante, et représentée par un segment tel que RT sur la Figure 3.

L'avantage d'une telle disposition avec des surfaces C₁ et C₂ est que l'on peut choisir la longueur K pour que les deux premières phases de fonctionnement (segments ON et NQ de la Figure 3) correspondent à la grande majorité des actions de freinage, et où le conducteur désire simplement ralentir son véhicule ou l'arrêter, dans des conditions que l'on peut qualifier de normales.

Par contre, le conducteur du véhicule peut rencontrer des situations imprévues, et où il est nécessaire de ralentir fortement et rapidement le véhicule. Dans une telle situation de freinage d'urgence, où le conducteur du véhicule exerce par hypothèse une action énergique sur la pédale de frein, le plongeur 28 est poussé fortement dans l'alésage 26, de sorte que le siège 28a se trouve dès le début de l'action de freinage amené en face de la surface C2.

Le servomoteur se trouve donc immédiatement placé dans la quatrième phase de fonctionnement décrite plus haut, et correspondant au segment RS de la Figure 3, les trois premières phases ayant été parcourues très rapidement. Dans cette phase, on voit sur la Figure 3 que la section de passage offerte à l'air en mouvement est largement supérieure à celle du servomoteur de la Figure 1, et donc que le débit d'air vers la chambre anière 16 du servomoteur sera également supérieur.

L'assistance fournie par le servomoteur de la Figure 2 dans ces conditions de fonctionnement est donc plus importante plus rapidement que par le servomoteur de la Figure 1. Le bruit de fonctionnement du servomoteur de la Figure 2 est certes supérieur à celui du servomoteur de la Figure 1, mais uniquement dans les cas de freinage d'urgence, qui représentent moins de 1% du total des actions de freinage. On pourra à cet effet choisir pour la longueur axiale K de la surface C₁ une valeur qui réponde à cette condition, cette valeur pouvant être comprise entre 0,3 et 2 millimètres selon le type de servomoteur.

On voit donc bien que l'on a réalisé un servomoteur dont le fonctionnement est silencieux, en ne modifiant, par rapport aux servomoteurs connus, que le plongeur et le clapet, tous les autres composants restant inchangés. Les moyens utilisés pour y parvenir sont donc particulièrement simples, fiables et peu onéreux, et de plus ne dégradent pas le temps de réponse du servomoteur.

L'invention procure ainsi à l'homme du métier des paramètres, tels que les demi-angles au sommet des surfaces coniques C, D, C₁ ou C₂, les rayons de courbure du siège de clapet 28a ou de la surface arrondie entre les surfaces A et C ou C₂, les longueurs L et K, sur lesquels il pourra influer, en fonction des caractéristiques d'un servomoteur donné, telles que ses dimensions, sa forme ou la nature des matériaux qui le composent, pour obtenir le résultat qu'il souhaite, c'est à dire un bruit de fonctionnement minimal.

Bien entendu, l'invention n'est pas limitée aux modes de réalisation qui ont été décrits, mais elle est susceptible au contraire de recevoir de nombreuses modifications qui apparaîtront à l'homme du métier, et qui rentrent dans le cadre des revendications annexées.

## Revendications

1. Servomoteur pneumatique d'assistance au freinage, comportant une enveloppe (10) possédant un axe de symétrie (X-X'), séparée de façon étanche par une structure de paroi mobile (12,20) en une chambre avant (14) reliée en permanence à une source de dépression, et une chambre arrière (16) reliée sélectivement à la chambre avant (14) ou à l'atmosphère extérieure par une valve à trois voies (36) actionnée par un plongeur (28) coulissant dans un alésage (26) de la paroi mobile (12,20) et solidaire d'une tige de commande axiale (30), la valve à trois voies (36) étant disposée dans une partie tubulaire arrière (22) de la structure de paroi mobile (12,20) faisant saillie à l'extérieur de l'enveloppe (10) et comportant un élément de clapet (36) coopérant par une première surface annulaire (A) avec un premier siège de clapet (28a) formé sur le plongeur (28) et par une seconde surface annulaire (B) avec un second siège de clapet (20a) formé sur la paroi mobile (20), caractérisé en ce que la seconde surface annulaire (B) est située dans un plan transversal en avant du plan transversal dans lequel est située la première surface annulaire (A), les première (A) et seconde (B) surfaces annulaires étant raccordées par une surface (C;C₁,C₂) de l'élément de clapet (36) située en regard d'une surface (D) du plongeur (28), la première surface annulaire (A) et la surface (C;C₁,C₂) de l'élément de clapet (36) définissant avec le premier siège de clapet (28a) formé sur le plongeur (28) un passage de valve (28a,36) dont la section (s) est une fonction non linéaire de la distance (d) entre le premier siège de clapet (28a) et la première surface annulaire (A) inférieure ou égale à la fonction linéaire de cette distance (d).

2. Servomoteur selon la revendication 1, caractérisé en ce que la surface (C) de l'élément de clapet (36) est cylindrique et définit avec le siège de clapet (28a) formé sur le plongeur (28) un passage de valve (28a,36) dont la section (s) est constante pour toute valeur de la distance (d) entre le premier siège de clapet (28a) et la première surface annulaire (A).

3. Servomoteur selon la revendication 1, caractérisé en ce que la surface (C) de l'élément de clapet (36) est tronconique et définit avec le siège de clapet (28a) formé sur le plongeur (28) un passage de valve (28a,36) dont la section (s) est sensiblement constante lorsque la distance (d) entre le premier siège de clapet (28a) et la première surface annulaire (A) varie.

4. Servomoteur selon la revendication 1, caractérisé en ce que la surface (C₁,C₂) de l'élément de clapet (36) est formée de deux surfaces (C₁,C₂) séparées par un épaulement radial (50), une première surface (C₁) définissant avec le premier siège de clapet (28a) un passage de valve (28a,36) dont la section (s) est une première fonction de la distance (d) entre le premier siège de clapet (28a) et la première surface annulaire (A), une deuxième surface (C₂) définissant avec le premier siège de clapet (28a) un passage de valve (28a,36) dont la section (s) est une deuxième fonction de la distance (d) entre le premier siège de clapet (28a) et la première surface annulaire (A).

5. Servomoteur selon la revendication 4, caractérisé en ce que la première surface (C₁) de l'élément de clapet (36) est tronconique et définit avec le siège de clapet (28a) formé sur le plongeur (28) un passage de valve (28a,36) dont la section (s) est égale à une première valeur sensiblement constante lorsque la distance (d) entre le premier siège de clapet (28a) et la première surface annulaire (A) varie, et en ce que la deuxième surface (C₂) de l'élément de clapet (36) est tronconique et définit avec le siège de clapet (28a) formé sur le plongeur (28) un passage de valve (28a,36) dont la section (s) est égale à une deuxième valeur sensiblement constante lorsque la distance (d) entre le premier siège de clapet (28a) et la première surface annulaire (A) varie, la deuxième valeur étant supérieure à la première valeur.

6. Servomoteur selon l'une des revendications précédentes, caractérisé en ce que la surface (D) du plongeur (28) en regard de la surface (C;C₁,C₂) est tronconique et forme avec celle-ci un volume divergent vers l'avant.

7. Servomoteur selon l'une des revendications précédentes, caractérisé en ce que le demi-angle au sommet des surfaces tronconiques (C,C₁,C₂,D) est compris entre 0 et 20 degrés.

8. Servomoteur selon l'une des revendications précédentes, caractérisé en ce que la longueur axiale (K) de la première surface (C₁) de l'élément de clapet (36) est comprise entre 0,3 et 2 millimètres.

## Claims

1. Pneumatic brake booster, including a casing (10) having an axis of symmetry (X-X'), divided in leaktight fashion by a movable wall structure (12, 20) into a front chamber (14) permanently connected to a source of partial vacuum, and a rear chamber (16) connected selectively to the front chamber (14) or to the outside atmosphere by a three-way valve (36) actuated by a plunger (28) sliding in a bore (26) of the movable wall (12, 20) and secured to an axial control rod (30), the three-way valve (36) being located in a rear tubular part (22) of the movable wall structure (12, 20) projecting outside of the casing (10) and including a valve element (36) interacting via a first annular surface (A) with a first valve seat (28a) formed on the plunger (28) and via a second annular surface (B) with a second valve seat (20a) formed on the movable wall (20), characterized in that the second annular surface (B) is situated in a transverse plane forwards off the transverse plane in which the first annular surface (A) is situated, the first (A) and second (B) annular surfaces being joined together by a surface (C; C₁, C₂) of the valve element (36) situated facing a surface (D) of the plunger (28), the first annular surface (A) and the surface (C; C₁, C₂) of the valve element (36) defining, together with the first valve seat (28a) formed on the plunger (28), a valve passage (28a, 36), the cross-section(s) of which is a non-linear function of the distance (d) between the first valve seat (28a) and the first annular surface (A)lower than or equal to the linear function of this distance (d).

2. Booster according to Claim 1, characterized in that the surface (C) of the valve element (36) is cylindrical and defines, together with the valve seat (28a) formed on the plunger (28), a valve passage (28a, 36), the cross-section(s) of which is constant for any value of the distance (d) between the first valve seat (28a) and the first annular surface (A).

3. Booster according to Claim 1, characterized in that the surface (C) of the valve element (36) is frustoconical and defines, together with the valve seat (28a) formed on the plunger (28), a valve passage (28a, 36), the cross-section(s) of which is substantially constant when the distance (d) between the first valve seat (28a) and the first annular surface (A) varies.

4. Booster according to Claim 1, characterized in that the surface (C₁, C₂) of the valve element (36) is formed of two surfaces (C₁, C₂) separated by a radial shoulder (50), a first surface (C₁) defining, together with the first valve seat (28a) a valve passage (28a, 36), the cross-section(s) of which is a first function of the distance (d) between the first valve seat (28a) and the first annular surface (A), a second surface (C₂) defining, together with the first valve seat (28a), a valve passage (28a, 36), the cross-section(s) of which is a second function of the distance (d) between the first valve seat (28a) and the first annular surface (A).

5. Booster according to Claim 4, characterized in that the first surface (C₁) of the valve element (36) is frustoconical and defines, together with the valve seat (28a) formed on the plunger (28), a valve passage (28a, 36), the cross-section(s) of which is equal to a first substantially constant value when the distance (d) between the first valve seat (28a) and the first annular surface (A) varies, and in that the second surface (C₂) of the valve element (36) is frustoconical and defines, together with the valve seat (28a) formed on the plunger (28), a valve passage (28a, 36), the cross-section(s) of which is equal to a second substantially constant value when the distance (d) between the first valve seat (28a) and the first annular surface (A) varies, the second value being greater than the first value.

6. Booster according to one of the preceding claims, characterized in that the surface (D) of the plunger (28) facing the surface (C; C₁, C₂) is frustoconical and forms, together with this surface, a volume which diverges forward.

7. Booster according to one of the preceding claims, characterized in that the half-angle at the vertex of the frustoconical surfaces (C, C₁, C₂, D) is between 0 and 20 degrees.

8. Booster according to one of the preceding claims, characterized in that the axial length (K) of the first surface (C₁) of the valve element (36) is between 0.3 and 2 millimetres.

## Patentansprüche

1. Pneumatischer Servomotor zur Bremsunterstützung, mit einer eine Symmetrieachse (X-X') besitzende Hülle (10), die auf dichte Weise durch eine bewegliche Trennwandstruktur (12, 20) in eine vordere Kammer (14), die ständig mit einer Unterdruckquelle verbunden ist, und eine hintere Kammer (16) geteilt ist, die selektiv mit der vorderen Kammer (14) oder mit der Außenatmosphäre über ein Drei-Wege-Ventil (36) verbunden ist, das durch einen Tauchkolben (28) betätigt wird, der in einer Bohrung (26) der beweglichen Trennwand (12, 20) gleitet und fest mit einer axialen Steuerstange (30) verbunden ist, wobei das Drei-Wege-Ventil (36) in einem hinteren röhrenförmigen Teil (22) der beweglichen Trennwandstruktur aus dem Äußeren der Hülle (10) herausragend angeordnet ist und ein Ventilelement (36) enthält, das über eine erste ringförmige Fläche (A) mit einem am Tauchkolben (28) ausgebildeten ersten Ventilsitz (28a) zusammenwirkt und über eine zweite ringförmige Fläche (B) mit einem an der beweglichen Trennwand (20) ausgebildeten zweiten Ventilsitz (20a), dadurch gekennzeichnet, daß die zweite ringförmige Fläche (B) in einer transversalen Ebene vor der transversalen Ebene angeordnet ist, in der die erste ringförmige Fläche (A) angeordnet ist, wobei die erste (A) und die zweite (B) ringförmige Fläche durch eine gegenüber einer Fläche (D) des Tauchkolbens (28) angeordnete Fläche (C; C₁, C₂) des Ventilelements (36) verbunden sind, wobei die erste ringförmige Fläche (A) und die Fläche (C; C₁, C₂) des Ventilelements (36) mit dem am Tauchkolben ausgebildeten ersten Ventilsitz (28a) einen Ventildurchgang (28a, 36) definieren, dessen Querschnitt (s) eine nichtlineare Funktion des Abstandes (d) zwischen dem ersten Ventilsitz (28a) und der ersten ringförmigen Fläche (A) ist, die kleiner oder gleich der linearen Funktion dieses Abstands (d) ist.

2. Servomotor nach Anspruch 1, dadurch gekennzeichnet, daß die Fläche (C) des Ventilelementes (36) zylindrisch ist und mit dem am Tauchkolben (28) ausgebildeten Ventilsitz (28a) einen Ventildurchgang (28a, 36) definiert, dessen Querschnitt (s) für alle Werte des Abstandes (d) zwischen dem erstem Ventilsitz (28a) und der ersten ringförmigen Fläche (A) konstant ist.

3. Servomotor nach Anspruch 1, dadurch gekennzeichnet, daß die Fläche (C) des Ventilelementes (36) kegelstumpfförmig ist und mit dem am Tauchkolben (28) ausgebildeten Ventilsitz (28a) einen Ventildurchgang (28a, 36) definiert, dessen Querschnitt (s) im wesentlichen konstant ist, wenn der Abstand (d) zwischen dem erstem Ventilsitz (28a) und der ersten ringförmigen Fläche (A) verändert wird.

4. Servomotor nach Anspruch 1, dadurch gekennzeichnet, daß die Fläche (C₁, C₂) des Ventilelements (36) aus zwei Flächen (C₁, C₂) gebildet ist, die durch eine radiale Schulter (50) getrennt sind, wobei eine erste Oberfläche (C₁) mit dem ersten Ventilsitz (28a) einen Ventildurchgang (28a, 36) definiert, dessen Querschnitt (s) eine erste Funktion des Abstandes (d) zwischen dem ersten Ventilsitz (28a) und der ersten ringförmigen Oberfläche (A) ist, und eine zweite Fläche (C₂) mit dem ersten Ventilsitz (28a) einen Ventildurchgang (28a, 36) definiert, dessen Querschnitt (s) eine zweite Funktion des Abstands (d) zwischen dem ersten Ventilsitz (28a) und der ersten ringförmigen Fläche (A) ist.

5. Servomotor nach Anspruch 4, dadurch gekennzeichnet, daß die erste Fläche (C₁) des Ventilelements (36) kegelstumpfförmig ist und mit dem am Tauchkolben (28) ausgebildeten Ventilsitz (28a) einen Ventildurchgang (28a, 36) definiert, dessen Querschnitt (s) gleich einem ersten Wert ist, der im wesentlichen konstant ist, wenn der Abstand (d) zwischen dem ersten Ventilsitz (28a) und der ersten ringförmigen Fläche (A) variiert, und daß die zweite Fläche (C₂) des Ventilelementes (36) kegelstumpfförmig ist und mit dem am Tauchkolben (28) ausgebildeten Ventilsitz (28a) einen Ventildurchgang (28a, 36) definiert, dessen Querschnitt (s) gleich einem zweiten Wert ist, der im wesentlichen konstant ist, wenn der Abstand (d) zwischen dem ersten Ventilsitz (28a) und der ersten ringförmigen Fläche (A) variiert, wobei der zweite Wert größer ist als der erste Wert.

6. Servomotor nach einem der vorhergehenden Ansprüche, dadurch gekennzeichnet, daß die der Fläche (C; C1, C2) gegenüberliegende Fläche (D) des Tauchkolbens (28) kegelstumpfförmig ist und mit dieser ein nach vorne divergentes Volumen bildet.

7. Servomotor nach einem der vorhergehenden Ansprüche, dadurch gekennzeichnet, daß der Halbwinkel des Scheitels der kegelstumpfförmigen Flächen. (C, C₁, C₂; D) zwischen 0 und 20 Grad liegt.

8. Servomotor nach einem der vorhergehenden Ansprüche, dadurch gekennzeichnet, daß die axiale Länge (K) der ersten Fläche (C₁) des Ventilelements (36) zwischen 0,3 und 2 Millimetern liegt.
